Europäisches Patentamt

European Patent Office

Office européen des brevets

(11) Veröffentlichungsnummer: **0 184 584 B1**

# EUROPÄISCHE PATENTSCHRIFT

(45) Veröffentlichungstag der Patentschrift: **25.09.91**

(51) Int. Cl.⁵: **G01D 5/24**

(21) Anmeldenummer: **84113309.3**

(22) Anmeldetag: **06.11.84**

(54) **Kapazitive Längen- und Winkelmesseinrichtung.**

(30) Priorität: **11.11.83 DE 3340782**

(43) Veröffentlichungstag der Anmeldung:
**18.06.86 Patentblatt 86/25**

(45) Bekanntmachung des Hinweises auf die
Patenterteilung:
**25.09.91 Patentblatt 91/39**

(84) Benannte Vertragsstaaten:
**AT BE CH DE FR GB IT LI NL SE**

(56) Entgegenhaltungen:
**CH-A- 539 837**
**GB-A- 953 449**
**US-A- 3 883 800**
**US-A- 3 961 318**

(73) Patentinhaber: **Mauser-Werke Oberndorf
GmbH
Teckstrasse 11
W-7238 Oberndorf(DE)**

(72) Erfinder: **Klingler, Otto, Dr.
Kapellenstrasse 43
W-7238 Oberndorf-Bochingen(DE)**
Erfinder: **Gruhler, Siegfried
Sigmarswanger Strasse 3
W-7243 Vöhringen-Wittersh.(DE)**
Erfinder: **Rivinius, Helmut
Kernerstrasse 26
W-7124 Bönningheim(DE)**

(74) Vertreter: **Hofmann, Gerhard, Dipl.-Ing. Patentassessor et al
Stephanstrasse 49
W-8500 Nürnberg 30(DE)**

## Beschreibung

Die Erfindung betrifft eine kapazitive platten förmige Längenmeßeinrichtung nach dem Oberbegriff des Patentanspruches 1.

Es sind bereits kapazitive Meßwertaufnehmer bekannt, die als Differentialkondensatoren ausgebildet sind. In der Praxis ergeben sich aber insbesondere beim Messen größerer Längen mit solchen bekannten Differentialkondensatoren Schwierigkeiten. Um solche Schwierigkeiten zu beseitigen, werden entsprechend der CH-PS 539 837 bei einer kapazitiven Längenmeßeinrichtung mehrere Differentialkondensatoren hintereinander angeordnet. Wird bei der Verschiebung der Meßbereich eines Differentialkondensators überschritten, so muß durch aufwendige schaltungstechnische Mittel der nächstfolgende in Verschieberichtung liegende Differentialkondensator an die elektronische Schaltungseinrichtung geschaltet werden. Die Lageinformation ist bei diesem System in der Amplitude der Speisespannungen des Differentialkondensators enthalten.

Aus der DE-OS 28 53 142 ist ferner eine Meßvorrichtung zur kapazitiven Bestimmung der relativen Lagen zweier zueinander beweglicher Teile bekannt, die im wesentlichen aus einem Gleitstück und einer Skala bestehen. Der Phasenwinkel Phi der Empfängerspannung ist eine lineare Funktion der Verschiebung des Gleitstücks gegenüber der Skala, wenn die Sendespannungen Sinusform besitzen.

Ein Nachteil dabei ist, daß durch die geringe Überdeckungsfläche zwischen Sende- und Skalenelektroden die Amplitude des Empfängersignals klein ist. Ferner ist von Nachteil, daß die Skalenelektroden halbsinusförmig geformt sind und deshalb nur schwer mit der erforderlichen Präzision herstellbar sind.

Das US-Patent 3,961,318 offenbart einen elektrostatischen Lagemeßfühler zur Erfassung von Längen- und Winkeländerungen. Dieser bekannte Lagemeßfühler besitzt ein festes Maßstabselement und ein dazu bewegliches Element, die beide elektrostatisch miteinander verbundene Elektroden aufweisen. Die Elektroden des Maßstabselement bestehen aus zwei Reihen finger- oder T-förmig ineinandergreifender Kondensatorbeläge, während das bewegliche Element sowohl Sende- als auch Empfangselektroden hat, von denen die Sendeelektroden mit Wechselspannung gespeist werden. Die Phasenverschiebung zwischen dem Sende- und dem Empfangssignal ist proportional zur linearen Verschiebung zwischen dem Maßstabselement und dem beweglichen Element. Die Sendeelektroden des beweglichen Teils sind zwischen zwei an ihren sich gegenüberliegenden Stirnseiten verlaufende Empfangselektroden angeordnet und weisen seitliche Vorsprünge und Teile eines Verbindungsmusters auf. Aufgrund dieser unsymmetrischen Formgebung kann eine unregelmäßige Überlappung der Elektroden des stationären Maßstabselementes auftreten, was zu einer unregelmäßigen kapazitiven Beeinflussung führt. Ferner kann eine direkte Beeinflussung der Sendeelektroden und der Empfangselektroden ohne Teilnahme der Elektroden des Maßstabselementes Meßfehler verursachen. Schließlich erscheint die Herstellung des Verbindungsmusters der Sendeelektroden, die alternierend in Gruppen und zwischen getrennten Gruppen verbunden sind, kompliziert und technisch aufwendig.

Aus der GB-Patentschrift 953,449 ist ein Gerät für die Herstellung von Signalen bekannt, die einer relativen Position zueinander von zwei bewegbaren Teilen entsprechen. Dabei wird die kapazitive Kopplung zwischen den zwei Teilen benutzt. Die Sendeelektroden werden in Gruppen von drei Elementen elektrisch gespeist. Dazu ist eine leitende, geerdete Schirmeinrichtung vorgesehen, die dazu dient, daß Verluststrom nicht in die externe Schaltung gelangt.

Es ist Aufgabe der Erfindung, eine kapazitive Längenmeßeinrichtung der eingangs genannten Art zu schaffen, welche die vorerwähnten Nachteile vermeidet und es ermöglicht, mit wenig Hardwareaufwand ein Meßsystem mit geringem Energiebedarf zu realisieren.

Diese Aufgabe wird erfindungsgemäß durch die Merkmale des Kennzeichenteils von Patentanspruch 1 gelöst. Erfinderische Aus- und Weiterbildungen sind in den Unteransprüchen 2 bis 3 genannt.

Eine solche Ausbildung einer kapazitiven Längenmeßeinrichtung erlaubt große Flächeninhalte der Kondensatorbeläge und damit eine gute kapazitive Kopplung. Durch die symmetrische Anordnung der Kondensatorbeläge werden ferner unerwünschte Kapazitätsänderungen, beispielsweise durch Luftspaltschwankungen, kompensiert. Die Empfangssignale werden einem Differenzverstärker zugeführt.

Die rechteckige und symmetrische Struktur der Sendeelektroden erlaubt gleichzeitig eine Verminderung der kapazitiven Kopplung und eine unkompliziertere Gestaltung dieser Elektroden und des geerdeten Schirms in ihrer Nähe. Nach dem erfindungsgemäßen Prinzip des kapazitiven Meßwertaufnehmers bewirkt die zu messende mechanische Größe eine Flächenänderung eines Kondensators, wobei die dadurch entstehende Kapazitätsänderung als ein veränderlicher, kapazitiver Blindwiderstand in einem Stromkreis wirkt, der die Phasenlage der elektrischen Signale ändert. Bei der erfindungsgemäßen Gestaltung der Kondensatorflächen erhält man eine lineare Funktion zwischen der zu messenden mechanischen Größe und der Phasenlage der Signale.

Die Kombination der Merkmale des Patentanspruches 1, die sich alle wirkungsmäßig gegenseitig unterstützen, erlaubt gleichzeitig eine Verminderung der störenden kapazitiven Beeinflussung und dadurch eine Verminderung von Meßfehlern und außerdem eine unkompliziertere Gestaltung des Verbindungsmusters der Elektroden durch die Platte des bewegbaren Teils und des geerdeten Schirms auf der betreffenden Fläche zwischen diesen Elektroden.

Zwischen den Sende- und Empfangselektroden wird eine gute Abschirmung herbeigeführt. Die Längenmeßeinrichtung mit den Merkmalen nach den Patentansprüchen 1 bis 3 funktioniert mit drei und auch mit mehr als drei Ausgangssignalen, wobei die Summe aller Ausgangssignale unabhängig von der Anzahl der Signale immer Null ist, so daß die Eigenschaft eines Drehfeldes gegeben ist. Die Längenmeßeinrichtung mißt die Phasenverschiebung zwischen den Eingangs- und Ausgangssignalen. Die Interpolation kann dabei durch einen Zähler und einige Gatter rein digital durchgeführt werden. Der Stormverbrauch solcher rein digitaler Komponenten und bei den gewählten niedrigen Frequenzen ist sehr gering.

In der Zeichnung ist ein Beispiel der Erfindung dargestellt. Es zeigen:

Fig. 1 den stationären Teil des Meßwertaufnehmers;

Fig. 2 den verschiebbaren Teil des Meßwertaufnehmers;

Fig. 3 Schaltbild der mit phasenverschobenen Wechselspannungen gespeisten Sendegruppen;

Fig. 4 Zeigerdiagramm für ein erstes Sendesignal;

Fig. 5 Zeigerdiagramm für ein phasenverschobenes zweites Sendesignal;

Fig. 6 schematische Darstellung der Ortskurve einer Empfängerspannung;

Fig. 7 Diagramm über den Verlauf von Teilkapazitäten;

Fig. 8 Blockschaltbild der elektronischen Schaltungseinrichtung;

Fig. 9 Ausführungsform einer Längenmeßeinrichtung in vereinfachter perspektivischer Darstellung.

Der Meßwertaufnehmer der erfindungsgemäßen Längenmeßeinrichtung besteht im wesentlichen aus einem stationären Teil 1, welcher den Maßstab bildet, und dem verschiebbaren Teil 2, der die Abtasteinheit darstellt. Der verschiebbare Teil 2 ist im geringen Abstand über dem stationären Teil 1 gelagert und parallel zu diesem verschiebbar.

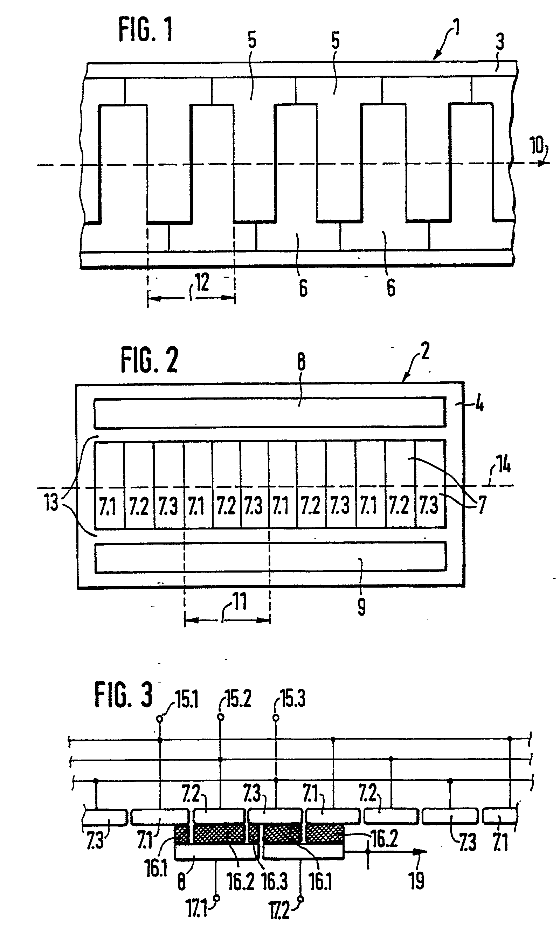

Die einander gegenüberliegenden Flächen 3 und 4 sind mit Kondensatorbelägen 5, 6, 7, 8 und 9 versehen. Die Beläge 5 und 6 des stationären Teils 1 sind T-förmig ausgebildet und derart auf den Teil 1 aufgetragen, daß sich zwei Reihen von Belägen ergeben, die kammartig ineinandergreifen. Die Beläge 5 und 6 des stationären Teils 1 bzw. des Maßstabs sind elektrisch nicht angeschlossen. Sie werden von dem verschiebbaren Teil 2 berührungslos abgetastet. Die Kondensatorbeläge 7 des verschiebbaren Teils 2 des Meßwertaufnehmers sind als rechteckförmige Beläge ausgeführt und nebeneinanderliegend symmetrisch auf dem Teil 2 angeordnet. Sie besitzen die Funktion von Sendeelektroden. Um $90°$ quer zu den Sendeelektroden befinden sich zu beiden Stirnseiten der Beläge 7 die Kondensatorbeläge 8 und 9, welche die Funktion von Empfangselektroden haben. Wie aus Fig. 2 ersichtlich ist, erstrecken sich die Empfangselektroden 8 und 9 exakt über die gesamte Anordnung der Sendeelektroden 7.

Die Sendeelektroden 7 werden derart mit Wechselspannung gespeist, daß ein elektrisches Drehfeld entsteht, das an den Empfangselektroden 8, 9 Wechselspannungen erzeugt, deren Phasenlage von der Stellung des verschiebbaren Teils 2 zum stationären Teil 1 abhängig ist. Zur digitalen Messung einer Länge wird der kapazitive Meßwertaufnehmer in ein digitales System eingefügt, das die Sendesignale erzeugt und die Empfangssignale auswertet.

Die zwei Reihen ineinandergreifender Kondensatorbeläge 5 und 6 sind gemäß Fig. 1 in Längsrichtung 10 um eine halbe Maßstabsperiode zueinander verschoben. Jeweils drei nebeneinanderliegende Beläge 7.1, 7.2 und 7.3 der Abtasteinheit 2 bilden eine Sendegruppe 11. Es sind mehrere Sendegruppen 11 auf dem Teil 2 nebeneinander angeordnet. Die Breite einer Sendegruppe 11 entspricht der Breite 12 von zwei nebeneinanderliegenden Stegen der T-förmigen Beläge 5 und 6 des stationären Teiles 1.

Die von den Sendeelektroden 7 des Teils 2 auf den Maßstab 1 gesendeten Signale werden durch die Beläge 5, 6 auf die Empfangselektroden 8, 9 der Abtasteinheit 2 zurückgekoppelt. Durch die gleichzeitige Abtastung mehrerer Sendegruppen 11 wird der Einfluß von zufälligen Fehlern der Maßstabteilung vermindert. Durch die erfindungsgemäße Anordnung der Empfangselektroden 8, 9 der Abtasteinheit 2 gegenüber den Belägen 5, 6 des Maßstabs 1 erreicht man einen Phasenversatz der beiden Empfangssignale zueinander von einer halben Maßstabsperiode. Um ein direktes Übersprechen vom Sender zum Empfänger in der Abtasteinheit zu verhindern, müssen die Sendeelektroden 7 und die Empfangselektroden 8, 9 durch einen geerdeten Schirm 13 voneinander elektrisch isoliert werden.

Die symmetrische Anordnung der Beläge 7, 8, 9 der Abtasteinheit 2 bezüglich der Verschiebeachse 14 und die Verstärkung der beiden um 180° phasenverschobenen Empfangssignale mit einem Differenzverstärker bewirken eine Signalverdopplung und eine weitgehende Kompensation der Fehlersignale, die durch Verkippen um die Verschiebeachse 14 hervorgerufen sein können.

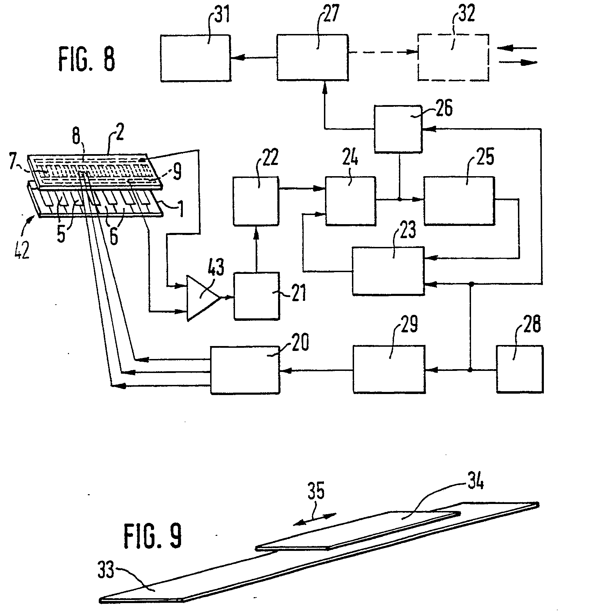

Der elektrische Anschluß der Sendeelektroden 7 und der Empfangselektroden 8; 9 an die elektronische Schaltungseinrichtung gemäß Fig. 8 erfolgt über die Rückseite des verschiebbaren Teils 2.

Die Beläge 7.1, 7.2, 7.3 jeder Sendegruppe 11 werden mit drei um jeweils 120° phasenverschobenen, sinusförmigen Wechselspannungen 15.1, 15.2 und 15.3 gleicher Amplitude und gleicher Frequenz aus der Beziehung

$$15.1 = 15.1' \cdot \sin wt$$
$$15.2 = 15.2' \cdot \sin (wt + 120°)$$
$$15.3 = 15.3' \cdot \sin (wt + 240°)$$

gespeist.

An den Empfangselektroden 8 und 9 erfolgt eine Überlagerung der Sendespannungen entsprechend den variablen Teilkapazitäten 16.1, 16.2 und 16.3, die von der Position der Abtasteinheit 2 gegenüber dem Maßstab 1 abhängig sind. Die an den Empfangselektroden resultierenden Spannungen 17.1 und 17.2 sind wiederum sinusförmige Wechselspannungen mit gleicher Frequenz wie die Sendespannungen 15.1, 15.2 und 15.3. Sie besitzen eine Phasenlage Phi bezüglich der Sendespannung 15.1, die abhängig ist von der Position zwischen dem Maßstab 1 und der Abtasteinheit 2 nach der Beziehung:

$$17.1 = 17.1' \cdot \sin (wt = 18.1)$$
$$17.2 = 17.2' \cdot \sin (wt + 18.2)$$

Daraus folgt:

$$18.1 = 18.2 + 180°.$$

Die Amplitude ist abhängig vom Wert der Teilkapazitäten.

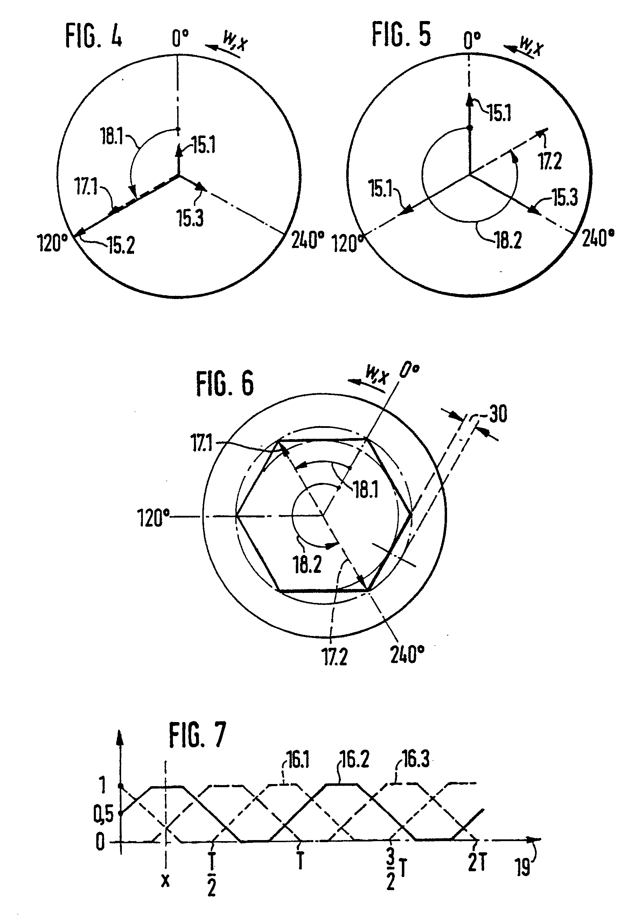

Die Anordnung der Kondensatorbeläge 5, 6, 7, 8, 9 auf dem Maßstab 1 und der Abtasteinheit 2 bewirkt, daß immer zwei oder drei Sendespannungen an der Signalübertragung beteiligt sind. Durch das Zeigerdiagramm in den Figuren 4 und 5 lassen sich die Überlagerung der Sendespannungen und die resultierenden Empfängerspannungen anschaulich darstellen. In den Figuren 4 und 5 sind die Zeigerdiagramme mit den Scheitelwerten für die in der Fig. 3 dargestellte Position des Meßwertaufnehmers gezeigt.

Der Phasenwinkel Phi 18.1 zwischen dem Empfangssignal Spannung 17.1 und dem Sendesignal Spannung 15.1 gemäß Fig. 4 ist proportional der Verschiebung 19 zwischen dem Maßstab 1 und der Abtasteinheit 2. Das gleiche trifft für den Phasenwinkel Phi 18.2 zwischen dem Empfangssignal Spannung 17.2 und dem Sendesignal Spannung 15.1 zu. Die Scheitelwerte sind abhängig vom Wert der Teilkapazitäten 16.1, 16.2, 16.3. Die Zeichen w und x in den Figuren 4 und 5 bedeuten w für Drehwinkelverschiebung und x für Wegeverschiebung.

In der Fig. 6 ist die Ortskurve der Empfängerspannungen 17.1 dargestellt. Es ist ersichtlich, daß die Amplituden der Empfängerspannungen 17.1 periodisch um den Wert 30 schwanken, was durch den Verlauf der Teilkapazitäten 16.1, 16.2, 16.3 bedingt ist und aus Fig. 7 hervorgeht. Die Abhängigkeit zwischen der Verschiebung 19 und dem Verlauf der Teilkapazitäten 16.1, 16.2 und 16.3 ist für die Empfängerspannung 17.1 in Fig. 7 veranschaulicht.

Die Verschiebeposition X entspricht der in Fig. 3 gezeigten Position des Meßwertaufnehmers. Die Teilkapazitäten 16.1, 16.2 und 16.3 stellen sich jeweils als Funktion des Verschiebeweges 19 dar. Ideal wäre hier ein rein sinusförmiger Verlauf der Teilkapazitäten, was zu einem konstanten Amplitudenverlauf der Empfängerspannung 17.1 führt. Um dies zu erreichen, wäre allerdings eine komplizierte Geometrie der Kondensatorbeläge notwendig. Bei dem Verschieben der Abtasteinheit 2 um eine Maßstabsperiode T, die dem Wert 12 in Fig. 1 bzw. 11 in Fig. 2 entspricht, ergibt sich eine Phasenverschiebung von Phi 18.1 um 360°. Wird beispeilsweise eine Maßstabsperiode von T = 3 mm verwendet, so beträgt bei der Gestaltung des Meßwertaufnehmers nach den Fig. 1 und 2 beim Verschieben um eine Maßstabsperiode T der Phasenwinkelfehler der Empfängerspannungen ± 1,1°. Dies entspricht einer Meßunsicherheit der Verschiebung 19 von ± 0,0092 mm. Dieser Phasenwinkelfehler wird weitgehend durch die Verknüpfung der beiden Empfangssignale 17.1 und 17.2 in der elektronischen Schaltungseinrichtung kompensiert.

In Fig. 8 ist das Blockschaltbild für die elektronische Schaltungseinrichtung zur digitalen Messung einer Verschiebung gezeigt.

Der kapazitive Meßwertaufnehmer ist in ein digitales System eingefügt. Die Speisung des Meßwertaufnehmers erfolgt mit drei um 120° phasenverschobenen Wechselspannungen, vorzugsweise sinusförmigen Spannungen, die in der Sendespannungserzeugungseinheit 20 nach bekannten Methoden aus Rechtecksignalen erzeugt werden. Möglich ist natürlich auch eine Speisung mit digitalen Signalen, die nur Oberwellen höherer Ordnung enthalten. Solche Oberwellen werden zwar in das Ausgangssignal des Meßwertaufnehmers übertragen, sie können aber mit einem Filter 21, das vor den Nulldurchgangsdetektor 22 geschaltet ist, beseitigt werden. Es entsteht hierdurch ein rechtecktörmiges Aufnehmersignal, dessen Phasenlage bezüglich des digitalen, gleichfrequenten Referenzsignals, das im Referenzteiler 23 erzeugt wird, die Informationen der zu messenden, mechanischen Größe enthält. Die Phasenauswertung erfolgt in einem Regelkreis, indem das Referenzsignal fortlaufend auf das Aufnehmersignal in der Synchronisationsstufe 25 synchronisiert wird. Durch einen Phasenvergleich 24 der beiden Signale wird ein Impuls erzeugt, dessen Pulsbreite proportional der Phasenverschiebung ist. Dieser Puls steuert einmal die Synchronisationsstufe 25, die durch Einblenden oder Ausblenden von Impulsen den Referenzteiler 23 auf das Aufnehmersignal synchronisiert. Dies bedeutet, daß die Phasenverschiebung auf Null geregelt wird. Andererseits wird durch den beim Phasenvergleich generierten Impuls ein Tor 26 für die Taktfrequenz eines Zählers 27 gesteuert. Das Gesamtsystem wird von einem Takt gesteuert, den ein quartzstabiler Oszillator 28 liefert.

Bei einer entsprechenden Zuordnung der Taktfrequenzen und Steuersignale im System ist das Zählergebnis gleich dem Wert der zu messenden mechanischen Größe.

Dem Oszillator 28 nachgeschaltet ist ein Frequenzteiler 29. Vom Frequenzteiler 29 ist der weitere Verlauf über die Sendespannungserzeugungseinheit 20 und einem kapazitiven Aufnehmer 42 zum Differenzverstärker 43. Mit 31 ist die Anzeige und mit 32 ein Mikrocomputer bezeichnet, an den der Zähler 27 angeschlossen ist.

Fig. 9 zeigt ein Längenmeßsystem, welches aus dem Maßstab 33 und der Abtasteinheit 34 gebildet ist. Die Abtasteinheit 34 ist parallel zum Maßstab in Pfeilrichtung 35 verschiebbar.

## Patentansprüche

1. Kapazitive platten förmige Längenmeßeinrichtung, deren Meßwertaufnehmer aus einem stationären Teil (1,33) und einem parallel über dessen Oberfläche im geringen Abstand verschiebbaren Teil (2,34) besteht, deren einander gegenüberliegende Flächen mit Kondensatorbelägen (5,6; 7,8,9) versehen sind, und die Phasenlage vom Sendesignal zum Empfangssignal proportional der Verschiebung zwischen dem stationären und dem verschiebbaren Teil des Meßwertaufnehmers ist, wobei die Kondensatorbeläge (5,6) des stationären Teils (1,33) aus zwei Reihen T-förmiger, kammartig ineinandergreifender Kondensatorbeläge mit einer Verschiebung in Längsrichtung (10) um eine halbe Maßstabsperiode (T) gebildet sind, während die Kondensatorbeläge (7,8,9) auf dem verschiebbaren Teil (2,34) teilweise als mit Wechselspannung beaufschlagte Sendeelektroden (7.1,7.2,7.3) und teilweise als Empfangselektroden (8,9) wirken, von denen die als Sendeelektroden (7.1,7.2,7.3) wirksamen Kondensatorbeläge bezüglich der Verschiebeachse (14) nebeneinander liegend angeordnet sind und die Empfangselektroden (8,9) zu beiden sich gegenüberliegenden Stirnseiten der Sendeelektroden (7.1,7.2,7.3) im Abstand und jeweils quer zu diesen verlaufende Kondensatorbeläge sind, die sich über jeweils alle Kondensatorbeläge der Sendeelektroden (7.1,7.2,7.3) erstrecken, wobei zumindest jeweils zwei Sendespannungen an einer Signalübertragung bei Verschiebung des verschiebbaren Teils (2,34) über dem stationären Teil (1,33) beteiligt sind und nur der verschiebbare Teil (2,34) an eine elektronische Schaltungseinrichtung angeschlossen ist,
dadurch gekennzeichnet,
daß die Sendeelektroden (7.1,7.2,7.3) des verschiebbaren Teiles (2,34) rechteckförmige Kondensatorbeläge sind, die bezüglich der Verschiebeachse (14) symmetrisch angeordnet sind, und daß sich die Empfangselektroden (8,9) in Verschieberichtung so erstrecken, daß sie nicht über die Kondensatorbeläge der Sendeelektroden (7.1,7.2,7.3) hinausragen, die in fortlaufender Reihenfolge mit jeweils drei um 120° zueinander phasenverschobenen, sinusförmigen Wechselspannungen (15.1,15.2,15.3) gleicher Amplitude und gleicher Frequenz derart gespeist sind, daß ein Drehfeld entsteht, welches an den von den Sendeelektroden (7.1,7.2,7.3) durch einen geerdeten Schirm (13) getrennten Empfangselektroden (8,9) eine Wechselspannung erzeugt, wobei auf dem verschiebbaren Teil (2,34) zumindest zwei komplette Gruppen (11) von Sendeelektroden (7.1,7.2,7.3) mit insgesamt jeweils 360° Phasenverschiebung nebeneinander angeordnet sind, und daß die elektrische Verbindung der einzelnen Sendeelektroden gleicher Phasenlage zueinander auf der den Kondensatorbelägen abgewandten Fläche des verschiebbaren Teiles (2,34) erfolgt.

2. Kapazitive Längenmeßeinrichtung nach Anspruch 1,
dadurch gekennzeichnet,
daß die sinusförmige Wechselspannungen von Rechtecksignalen abgeleitet sind, und daß die Empfangssignale einem Differenzverstärker (43) zugeführt werden, dessen Ausgangssignal mittels eines Nulldurchgangsdetektors (22) digitalisiert wird.

3. Kapazitive Längenmeßeinrichtung nach Anspruch 2,
dadurch gekennzeichnet,
daß das digitalisierte Aufnehmersignal einem Regelkreis so zugeführt wird, daß die Phasendifferenz zwischen dem Aufnehmersignal und dem Referenzsignal zu Null geregelt und die Phasendifferenz digital ausgewertet wird, wobei die Phasendifferenz die zu messende Lageinformation enthält.

## Claims

1. A capacitive, plate-like length measuring device, the measured value sensor of which comprises a stationary component (1, 33) and a component (2, 34) which is displaceable in parallel above the upper surface of said stationary component (1, 33) at a short distance therefrom, and the oppositely arranged surfaces of which are provided with capacitor coatings (5, 6; 7, 8, 9) and where the phase relation of the transmitted signal to the received signal is proportional to the displacement between the stationary component and the displaceable component of the measured value sensor, wherein the capacitor coatings (5, 6) of the stationary component (1, 33) are formed by two rows of T-shaped capacitor coatings which engage in the manner of teeth and which are offset in the longitudinal direction (10) by half a measurement scale period (T), whereas the capacitor coatings (7, 8, 9) on the displaceable component (2, 34) serve partially as transmitting electrodes (7.1, 7.2, 7.3) supplied with a.c. voltage and partially as receiving electrodes (8, 9), of which the capacitor coatings which serve as transmitting electrodes (7.1, 7.2, 7.3) are arranged beside one another with respect to the axis of displacement (14) and the receiving electrodes (8, 9) on both of the oppositely arranged end sides of the transmitting electrodes (7.1, 7.2, 7.3) are capacitor coatings which are arranged at a distance from and in each case transversely to the latter and which extend over all the respective capacitor coatings of the transmitting electrodes (7.1, 7.2, 7.3), where at least two respective transmitting voltages participate in a signal transmission in the event of the displacement of the displaceable component (2, 34) over the stationary component (1, 33) and only the displaceable component (2, 3) is connected to an electronic circuit device, characterised in that the transmitting electrodes (7.1, 7.2, 7.3) of the displaceable component (2, 34) are rectangular capacitor coatings which are arranged symmetrically with respect to the axis of displacement (14), and that the receiving electrodes (8, 9) extend in the direction of displacement in such manner that they do not project beyond the capacitor coatings of the transmitting electrodes (7.1, 7.2 7.3), which are fed in a continuous sequence with three respective sinusoidal a.c. voltages (15.1, 15.2, 15.3) which are of equal amplitude and equal frequency and which are shifted in phase with respect to one another by 120°, in such manner that a rotary field is formed which generates an a.c. voltage across the receiving electrodes (8, 9), which latter are separated from the transmitting electrodes (7.1, 7.2, 7.3) by an earthed screen (13), where at least two complete groups (11) of transmitting electrodes (7.1, 7.2, 7.3) with a total respective phase shift of 360° are arranged one beside another on the displaceable component (2, 34), and that the electrical connection between the individual transmitting electrodes which have an equal phase relation to one another takes place on that surface of the displaceable component (2, 34) which faces away from the capacitor coatings.

2. A capacitive length measuring device as claimed in Claim 1, characterised in that the sinusoidal a.c. voltages are derived from rectangular wave-form signals and that the received signals are fed to a differential amplifier (43), the output signal of which is digitalised by means of a zero transition detector (22).

3. A capacitive length measuring device as claimed in Claim 2, characterised in that the digitalised sensor signal is fed to a regulating circuit in such manner that the phase difference between the sensor signal and the reference signal is adjusted to zero and the phase difference is digitally analysed, where the phase difference contains the position information which is to be measured.

## Revendications

1. Dispositif capacitif de mesure de longueur en forme de plaque dont le transducteur de valeur mesurée est constitué d'une partie fixe (1, 33) et d'une partie (2, 34) déplaçable parallèlement à la surface de la première, à une faible distance au-dessus de celle-ci, dont les surfaces en vis-à-vis sont pourvues d'armatures de condensateur (5, 6 ; 7, 8, 9) et la relation des phases entre le signal d'émission et le signal de réception est proportionnelle au déplacement entre la partie fixe et la partie déplaçable du transducteur de valeur mesurée, les armatures de condensateur (5, 6) de la partie fixe (1, 3) étant formées par deux rangées d'armatures en T, engrenant l'une dans l'autre à la manière d'un peigne avec un déplacement dans la direction longitudinale (10) d'une demi-période d'échelle (T), tandis que les armatures de condensateur ((7, 8, 9) agissent sur la partie déplaçable (2, 34) en partie comme des électrodes d'émission (7.1, 7.2, 7.3) recevant une tension alternative et en partie comme des électrodes de réception (8, 9) dont les armatures de condensateur, agissant comme des électrodes d'émission (7.1, 7.2, 7.3), sont juxtaposées par rapport à l'axe de déplacement (14) et les électrodes de réception (8, 9) sont des armatures de condensateur s'étendant sur les deux côtés frontaux se faisant face des électrodes d'émission (7.1, 7.2, 7.3), à une certaine distance et transversalement à celles-ci, qui s'étendent sur toutes les armatures de condensateur des électrodes d'émission (7.1, 7.2, 7.3), deux tensions d'émission au moins participant à une transmission de signaux lors du déplacement de la partie déplaçable (2, 34) sur la partie fixe (1, 33) et seule la partie déplaçable (2, 34) étant raccordée à un circuit électronique, caractérisé en ce que les électrodes d'émission (7.1, 7.2, 7.3) de la partie déplaçable (2, 34) sont des armatures de condensateur rectangulaires qui sont disposées symétriquement par rapport à l'axe de déplacement (14) et en ce que les électrodes de réception (8, 9) s'étendent dans la direction de déplacement de manière à ne pas dépasser les armatures de condensateur des électrodes d'émission (7.1, 7.2, 7.3) qui sont alimentées, en succession continue, avec trois tensions alternatives (15.1, 15.2, 15.3) sinusoïdales, déphasées l'une par rapport à l'autre de 120°, de même amplitude et de même fréquence, de manière qu'il se forme un champ tournant qui engendre une tension alternative sur les électrodes de réception (8, 9), séparées des électrodes d'émission (7.1, 7.2, 7.3) par un écran (13) mis à la terre, deux groupes complets (11) au moins d'électrodes d'émission (7.1, 7.2, 7.3) étant juxtaposés, avec au total un déphasage de 360°, sur la partie déplaçable (2, 34) et en ce que la liaison électrique des différentes électrodes d'émission de même relation de phase l'une par rapport à l'autre, s'effecte sur la surface de la partie déplaçable (2, 34), opposée aux armatures de condensateur.

2. Dispositif capacitif de mesure de longueur selon la revendication 1, caractérisé en ce que les tensions alternatives sinusoïdales sont dérivées de signaux rectangulaires et en ce que les signaux de réception sont envoyés à un amplificateur différentiel (43) dont le signal de sortie est numérisé par un détecteur de passage par zéro (22).

3. Dispositif capacitif de mesure de longueur selon la revendication 2, caractérisé en ce que le signal de transducteur numérisé est envoyé à un circuit de régulation, de telle sorte que la différence de phase entre le signal de transducteur et le signal de référence soit réglée sur zéro et que la différence de phase soit exploitée numériquement, la différence de phase contenant l'information de position à mesurer.

FIG. 1

FIG. 2

FIG. 3

EP 0 184 584 B1

FIG. 4

FIG. 5

FIG. 6

FIG. 7

FIG. 8

FIG. 9